(19) Europäisches Patentamt
European Patent Office
Office européen des brevets

(11) **EP 2 539 567 B1**

(12) **FASCICULE DE BREVET EUROPEEN**

(45) Date de publication et mention
de la délivrance du brevet:
**29.11.2017 Bulletin 2017/48**

(21) Numéro de dépôt: **11706875.9**

(22) Date de dépôt: **26.01.2011**

(51) Int Cl.:
*F02D 41/00* *(2006.01)*   *F02D 41/24* *(2006.01)*

(86) Numéro de dépôt international:
**PCT/FR2011/050152**

(87) Numéro de publication internationale:
**WO 2011/104450 (01.09.2011 Gazette 2011/35)**

(54) **ESTIMATION DE LA PRESSION D'ECHAPPEMENT D'UN VEHICULE**

AUSPUFF DRUCKSCHÄTZUNG IN EINEM FAHRZEUG

EXHAUST PRESSURE ESTIMATION IN A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.02.2010 FR 1051305**

(43) Date de publication de la demande:
**02.01.2013 Bulletin 2013/01**

(73) Titulaire: **PSA Automobiles SA
78300 Poissy (FR)**

(72) Inventeurs:
• **TRELLE, Frédéric
F-93150 Le Blanc Mesnil (FR)**
• **QUIE, Philippe
77190 Dammarie-Les-Lys (FR)**

(56) Documents cités:
**EP-A1- 1 312 784       EP-A1- 1 580 406
WO-A2-2008/024590   DE-A1- 10 158 247
DE-A1- 10 158 249     FR-A1- 2 873 409
US-A1- 2007 157 715   US-A1- 2007 277 778**

**Description**

L'invention concerne un procédé d'estimation de la pression d'échappement instantanée d'un moteur de véhicule.

La pression d'échappement instantanée est un paramètre qui peut être utilisé pour améliorer la précision des modèles d'estimation du remplissage en air frais d'un moteur. Cet estimateur du remplissage en air frais est en particulier l'un des estimateurs principaux du contrôle des moteurs essence.

L'intégration de capteurs de pression dans la ligne d'échappement d'un véhicule pour mesurer la pression d'échappement instantanée est coûteuse et demande une adaptation trop importante de la ligne d'échappement. Il est donc souhaitable de proposer une alternative pour déterminer la pression d'échappement instantanée.

Le document FR-A-2 919 388 suggère l'utilisation d'un modèle de pression instantanée à l'échappement en fonction d'un ensemble de moments particuliers d'un cycle de fonctionnement d'un moteur de référence, pour un ensemble de points dudit moteur de référence, dans un procédé de suralimentation d'un moteur monocylindre. Ce document ne fournit cependant pas d'enseignement relatif à la mise en oeuvre d'un tel modèle. Le document WO2008-024590 divulgue également un procédé d'estimation de la pression d'échappement.

Il y a donc un besoin pour une solution permettant d'estimer de façon simple et efficace la pression instantanée à l'échappement d'un moteur.

Pour cela, l'invention propose un procédé d'estimation de la pression d'échappement instantanée d'un moteur de véhicule, le moteur étant relié à un collecteur d'échappement, le véhicule comprenant au moins un arbre à cames commandant des soupapes d'admission et d'échappement, caractérisé en ce que le procédé comprend les étapes de détermination d'un régime du moteur et d'un remplissage total de gaz à l'échappement ; de calcul de rapports de pression intermédiaires à partir de cartographies ayant pour entrées le régime moteur et le remplissage total ; de calcul d'un rapport de pression global par interpolation des rapports de pression intermédiaires ; et de multiplication du rapport de pression global par une pression d'échappement de référence, le produit de la multiplication déterminant la pression d'échappement instantanée, le remplissage total D étant donné par la formule :

$$D = k_1 \times \frac{debit}{\rho_0 \times V_0 \times N \times Nbr\_cyl} \times \sqrt{\frac{T_0}{T_{ech}}} \times \frac{P_0}{P_{atmo}}$$

avec : $debit = debit_{ech}$ pour un moteur atmosphérique ou susceptible d'être suralimenté, ou $débit = debit_{turbine} = debit_{ech} - debit_{wastegate}$, le moteur étant suralimenté ;
et avec :

$debit_{ech}$ : débit échappement total en [kg/s] :

$$debit_{ech} = debit_{air\_frais} + debit_{air\_balayé} + debit_{essence} - debit_{EGR} + debit_{IAE}$$

$débit_{air\_frais}$ : débit d'air frais issu du remplissage en air frais en [kg/s],
$debit_{air\_balayé}$ : débit d'air frais balayé de l'admission vers l'échappement en [kg/s],
$debit_{essence}$ : débit d'essence injecté en [kg/s],
$debit_{EGR}$ : débit d'EGR en [kg/s],
$debit_{IAE}$ : débit d'IAE en [kg/s],
$debit_{turbine}$ : débit total passant par la turbine en [kg/s]
$debit_{wastegate}$ débit d'air passant par la wastegate en [kg/s],
$Nbr\_cyl$ : nombre de cylindre du moteur thermique,
$\rho_0$ : masse volumique de normalisation en [kg/m$^3$],
$V_0$ : volume de normalisation : cylindrée unitaire du moteur en [m$^3$],
$T_{ech}$ : température échappement dans le collecteur en [K],
$T_0$ : température de normalisation en [K],
$P_0$ : pression de normalisation en [Pa],
$P_{atmo}$ : pression atmosphérique en [Pa],
$N$ : régime moteur en [tr/min],
$k_1$ : coefficient de conversion d'unité : $k_1 = 120$.

Selon l'invention les rapports de pression intermédiaires établis en sortie des cartographies sont les rapports de pression pour des positions prédéterminées des soupapes d'admission ou d'échappement.

Selon une variante, les positions prédéterminées des soupapes sont une position minimale, une position moyenne, et une position maximale d'ouverture des soupapes d'admission, et une position minimale, une position moyenne, et une position maximale de fermeture des soupapes d'échappement.

Selon une variante, l'interpolation est fonction d'une valeur cible d'ouverture de soupape d'admission prédéterminée et d'une valeur cible de fermeture de soupape d'échappement prédéterminée.

Selon une variante, l'interpolation est précédée des étapes de détermination des deux positions prédéterminées des soupapes d'échappement voisines de la valeur cible de fermeture; de détermination des deux positions prédéterminées des soupapes d'admission voisines de la valeur cible d'ouverture ; et, d'interpolation linéaire entre les rapports de pression intermédiaires des deux positions prédéterminées des soupapes d'échappement voisines de la valeur cible de fermeture et des deux positions prédéterminées des soupapes d'admission voisines de la valeur cible d'ouverture.

Notons que l'on entend par « wastegate » un clapet placé en amont de la turbine et permettant la dérivation d'une partie des gaz d'échappement allant à la turbine. Ceci a pour effet de diminuer l'énergie transmise à la turbine et donc de diminuer la pression d'air de suralimentation.

Selon une variante, la pression d'échappement de référence est égale à la pression d'échappement moyenne évaluée sur un cycle du moteur: dans le collecteur, le moteur étant atmosphérique ou après une turbine, le moteur étant suralimenté.

L'invention se rapporte aussi à un procédé d'estimation de remplissage en air frais d'un moteur de véhicule en fonction de la pression d'échappement instantanée, la pression d'échappement instantanée étant estimée suivant le procédé décrit précédemment.

L'invention se rapporte aussi à une ligne d'échappement des gaz d'échappement d'un moteur, caractérisée en ce que la ligne comprenant une mémoire contenant les cartographies ayant pour entrées le régime moteur et le remplissage total, et, un calculateur pour estimer la pression d'échappement instantanée suivant le procédé décrit précédemment.

L'invention se rapporte aussi à un véhicule caractérisé en ce qu'il comprend un moteur et, en sortie du moteur, une ligne d'échappement telle que décrite précédemment.

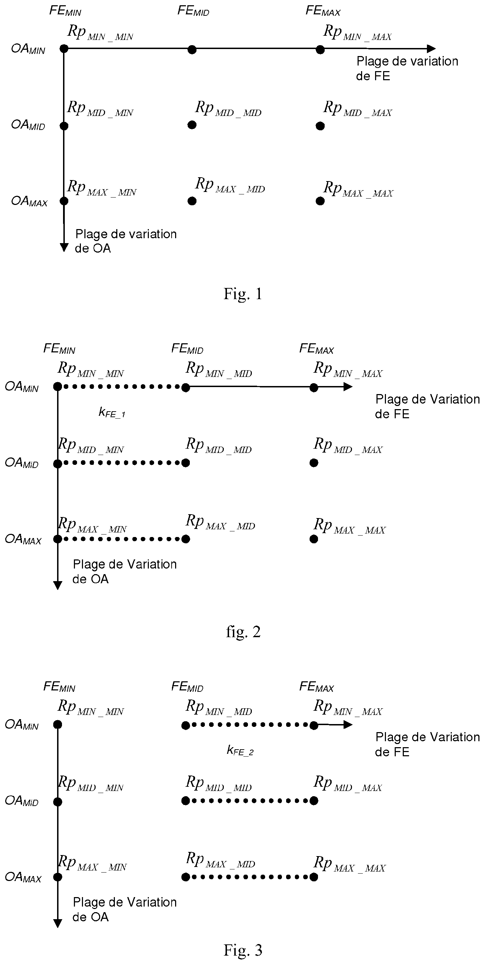

D'autres caractéristiques et avantages de l'invention apparaîtront à la lecture de la description détaillée qui suit des modes de réalisation de l'invention, donnés à titre d'exemple uniquement et en références aux dessins qui montrent figures 1 à 9 des graphes de calcul.

L'invention propose un procédé simple et efficace d'estimation de la pression d'échappement instantanée d'un moteur de véhicule. De manière connue, le moteur est relié à un collecteur d'échappement. Le véhicule est de manière générale tout véhicule motorisé. En particulier, le moteur peut être un moteur thermique essence. Le moteur peut-être suralimenté ou atmosphérique. Le moteur peut avoir trois, quatre ou six cylindres, ou tout autre nombre de cylindres. Le véhicule comprend au moins un arbre à cames commandant des soupapes d'admission et d'échappement. Le véhicule peut comprendre un arbre à cames pour les soupapes d'admission et un arbre à cames pour les soupapes d'échappement, ou un seul arbre qui réalise les deux fonctions. Le véhicule peut également comprendre ou non un déphaseur d'arbre à cames, à l'admission et/ou à l'échappement. Le véhicule peut inclure ou non un dispositif d'EGR (acronyme pour l'anglais « Exhaust Gas Recirculation », i.e. recirculation des gaz d'échappement) et/ou un dispositif d'IAE (acronyme pour « Injection d'Air à l'Echappement »).

Le procédé va maintenant être décrit à travers un exemple particulier de mise en oeuvre. Il est entendu que les différentes caractéristiques de l'exemple peuvent être combinées indépendamment les unes des autres à l'exemple général.

Le procédé propose de déterminer la pression d'échappement instantanée $P_{instantanee}$ par le produit de la multiplication d'un rapport de pression global $R_p$ par une pression d'échappement de référence $P_{reference}$. On peut donc estimer $P_{instantanee}$ en Pascal en fonction de $P_{reference}$ par l'équation générale:

$$P_{instantanee} = P_{reference} \times Rp$$

La pression d'échappement de référence $P_{reference}$ peut être égale à la pression d'échappement moyenne évaluée sur un cycle du moteur. L'évaluation peut être effectuée dans le collecteur pour une application atmosphérique, ou après une turbine pour une application suralimentée. Dans ce cas, pour un moteur atmosphérique, $P_{reference}$ est évaluée systématiquement dans le collecteur. Pour un moteur également adapté à être utilisé dans une application suralimentée, $P_{reference}$ est évaluée après la turbine de suralimentation. Différents modèles théoriques connus, fournissant $P_{reference}$ en fonction de la pression extérieure et de ces évaluations, peuvent en outre être utilisés pour plus de précision.

$R_p$ désigne le rapport de pression global et est sans dimension. $R_p$ est calculé par interpolation de rapports de pression intermédiaires $Rp_{x\_y}$, qui constituent des intermédiaires de calcul. Ces rapports de pression intermédiaires $Rp_{x\_y}$ sont eux-mêmes calculés à partir de cartographies, qui peuvent être prédéterminées. Ces cartographies peuvent avoir pour entrées, à un instant donné, le régime N du moteur et le remplissage D total de gaz à l'échappement normalisé en température échappement et en pression atmosphérique à cet instant. Le remplissage en air frais est un rapport de masse qui permet de déterminer à la fermeture des soupapes d'admission la quantité d'air frais présente dans la chambre de combustion du moteur.

Suivant le procédé de l'exemple, si l'on détermine le régime moteur N et le remplissage total D à un instant donné, on peut alors déterminer les $Rp_{x\_y}$ à partir des cartographies et ainsi calculer $P_{instantanee}$. Un tel procédé est donc particulièrement simple à mettre en oeuvre et consomme par conséquent peu de ressources processeur.

L'étape d'interpolation permet d'affiner le résultat en impliquant dans la multiplication plusieurs valeurs établies en sortie des cartographies. Le procédé permet ainsi une estimation efficace et précise de la pression d'échappement instantanée.

De manière générale, les cartographies sont établies de manière connue par des essais. En particulier, pour chaque couple d'entrées (N, D) pour lequel l'on souhaite renseigner la cartographie, on peut par exemple réaliser une ou plusieurs mesures de la pression instantanée. On peut réaliser ces mesures de pression en faisant varier des paramètres, comme par exemple la pression atmosphérique, la température échappement, l'ouverture des soupapes d'admission, la fermeture des soupapes d'échappement et, de manière générale, tout paramètre susceptible d'influencer la pression instantanée et la charge du véhicule et/ou en fixant certains de ces mêmes paramètres. On peut alors moyenner les résultats. La mesure peut être faite par un capteur dont le véhicule test est muni aux fins d'établissement de la cartographie. Que ce soit une application suralimentée ou atmosphérique, la mesure de la pression échappement instantanée, se fait dans les deux cas au niveau d'une canule d'échappement du collecteur échappement.

Dans l'exemple, les paramètres d'entrée des cartographies sont le remplissage total normalisé et le régime moteur. On peut alternativement prendre d'autres paramètres en entrées des cartographies. On peut choisir les plages de valeurs des paramètres sur lesquelles on établit les cartographies en fonction des conditions prévues d'utilisation du moteur. Par exemple, on peut augmenter la finesse sur les plages de valeurs les plus habituelles. On optimise ainsi la place mémoire que prend la cartographie.

Le régime moteur peut être donné en nombre de tours par minute. Il constitue une première entrée des cartographies. Le remplissage D total de gaz à l'échappement normalisé en température échappement et en pression atmosphérique peut être donné par la formule :

$$D = k_1 \times \frac{debit}{\rho_0 \times V_0 \times N \times Nbr\_cyl} \times \sqrt{\frac{T_0}{T_{ech}}} \times \frac{P_0}{P_{atmo}}$$

avec: $debit = debit_{ech}$ ; pour un moteur atmosphérique ou susceptible d'être suralimenté, ou $debit\ debit_{turbine} = debit_{ech} - debit_{wastegate}$, pour un moteur exclusivement suralimenté, où la formule donne alors le remplissage total passant par la turbine.

Dans cette formule, on a :

$debit_{ech}$ : débit échappement total en [kg/s] :

$$debit_{ech} = debit_{air\_frais} + debit_{air\_balayé} + debit_{essence} - debit_{EGR} + debit_{IAE}$$

$débit_{air\_frais}$ : débit d'air frais issu du remplissage en air frais en [kg/s],

$debit_{air\_balayé}$ : débit d'air frais balayé de l'admission vers l'échappement en [kg/s],

$debit_{essence}$ : débit d'essence injecté en [kg/s],

$debit_{EGR}$ : débit d'EGR en [kg/s],

$debit_{IAE}$ : débit d'IAE en [kg/s],

$debit_{turbine}$ : débit total passant par la turbine en [kg/s],

$debit_{wastegate}$ : débit d'air passant par la « wastegate » en [kg/s],

*Nbr_cyl :* nombre de cylindres du moteur thermique,

$\rho_0$ : masse volumique de normalisation en [kg/m³],

$V_0$ : volume de normalisation : cylindrée unitaire du moteur en [m³],

$T_{ech}$ : température échappement dans le collecteur en [K],

$T_0$ : température de normalisation en [K] (exemple : 273,15 K),

$P_0$ : pression de normalisation en [Pa] (exemple : 101300 Pa),

$P_{atmo}$ : pression atmosphérique en [Pa],

*N :* régime moteur en [tr/min],

$k_1$ : coefficient de conversion d'unité : $k_1$=120.

Le remplissage total constitue la deuxième entrée des cartographies. Cette formule du remplissage total permet de tenir compte des effets du débit, de la température et de la pression. Le débit est calculé de manière différente selon le type du moteur, atmosphérique ou suralimenté d'un côté et exclusivement suralimenté de l'autre. Les normalisations des différents paramètres qui apparaissent dans la formule permettent de mieux cerner la portion de la valeur de ces paramètres qui fait varier la pression d'échappement instantanée. De même, la division du débit par le régime moteur N permet de mieux distinguer l'effet du remplissage de l'effet du régime moteur, déjà pris en compte dans la première entrée. Une deuxième entrée suivant une telle formule est à la fois simple à obtenir et de corrélation moindre avec la première entrée. Cela permet aux cartographies de prendre moins de place mémoire et ainsi d'être plus courtes à obtenir.

Dans l'exemple, les rapports de pression intermédiaires établis en sortie des cartographies sont les rapports de pression pour des positions prédéterminées des soupapes d'admission ou d'échappement. Ainsi, on peut établir les cartographies selon le procédé mentionné plus haut en fixant les soupapes d'admission et/ou les soupapes d'échappement dans des positions prédéterminées. Les cartographies renseignent donc sur la pression d'échappement pour des positions prédéterminées des soupapes. Il peut y avoir autant de cartographies que de couples de positions prédéterminées des soupapes d'admission et des soupapes d'échappement.

Par exemple, les positions prédéterminées des soupapes peuvent être une position minimale $OA_{MIN}$, une position moyenne $OA_{MID}$, et une position maximale $OA_{MAX}$ d'ouverture des soupapes d'admission, et une position minimale $FE_{MIN}$, une position moyenne $FE_{MID}$, et une position maximale $FE_{MAX}$ de fermeture des soupapes d'échappement.

$OA_{MAX}$, $OA_{MIN}$, $FE_{MAX}$, $FE_{MIN}$ représentent les valeurs des butées de la plage des OA et FE. Les positions de $OA_{MID}$ et $FE_{MID}$ ne sont pas forcement à mi-distance de la plage des OA et FE.

On peut alors établir neuf cartographies donnant chacune un rapport de pression intermédiaire $Rp_{x\_y}$ correspondant aux couples ($FE_x$, $OA_y$) et représentées par les points sur la figure 1.

De manière générale, plus il y a de cartographies, meilleure la précision d'estimation est, mais plus l'espace mémoire et les ressources processeur sont consommées lors de l'estimation. Les positions prédéterminées des soupapes ci-dessus offrent un bon compromis entre précision d'estimation et efficacité du procédé.

L'interpolation peut alors être en fonction d'une valeur cible d'ouverture OA de soupape d'admission prédéterminée et d'une valeur cible FE de fermeture de soupape d'échappement prédéterminée. Cela permet d'estimer la pression d'échappement à un point du cycle du moteur. Le choix des valeurs cibles dépend de l'application faite de l'estimation de la pression d'échappement instantanée. Le point du cycle déterminé par le couple (FE, OA) peut être défini par la position d'un arbre à cames admission (VVT adm) et d'un arbre à cames échappement (VVT ech).

Un tel procédé trouve une utilité particulière pour les moteurs thermiques essence munis de déphaseurs d'arbres à cames et dans lesquels on souhaite effectuer du croisement de soupapes. Dans une telle application, on a en effet besoin de la pression d'échappement instantanée estimée à des points cycle particuliers.

De manière générale, toute fonction d'interpolation peut être utilisée. Par exemple, des interpolations polynomiales à différents degrés peuvent être utilisées. Dans l'exemple, l'interpolation se fait linéairement. Une interpolation linéaire offre des résultats satisfaisants en consommant très peu de ressources processeur. Dans ses grandes lignes, l'interpolation peut par exemple être précédée des étapes de détermination des deux positions prédéterminées des soupapes d'échappement voisines de la valeur cible de fermeture; détermination des deux positions prédéterminées des soupapes d'admission voisines de la valeur cible d'ouverture ; et interpolation linéaire entre les rapports de pression intermédiaires des deux positions prédéterminées des soupapes d'échappement voisines de la valeur cible de fermeture et des deux positions prédéterminées des soupapes d'admission voisines de la valeur cible d'ouverture.

Pour un point (FE, OA) cible, on estime ainsi le rapport de pression global $R_p$ en interpolant les rapports de pression intermédiaires $Rp_{x-y}$ correspondant aux quatre points $(FE_x, OA_y)$ les plus proches de (FE, OA). Chacun des $Rp_{x\_y}$ est calculé à partir des quatre cartographies correspondant aux points $(FE_x, OA_y)$, en entrant le régime moteur N et le remplissage total D dans les cartographies.

Un exemple détaillé d'une telle interpolation linéaire est maintenant présenté. Dans un premier temps, on compare FE aux positions prédéterminées des soupapes d'échappement $FE_{MIN}$, $FE_{MID}$, et $FE_{MAX}$.

Si $FE_{MIN} \leq FE \leq FE_{MID}$, comme cela est représenté en pointillés sur la figure 2, on calcule $R_p$ dans un deuxième temps par la formule :

$$Rp = Rp_{FEmid} + k_{FE\_1} \times (Rp_{FEmin} - Rp_{FEmid})$$

Avec

$$k_{FE\_1} = \min\left(1 ; \max\left(0 ; \frac{FE_{MID} - FE}{FE_{MID} - FE_{MIN}}\right)\right) , \quad k_{FE\_1} \in [0 ; 1]$$

ce qui implique notamment que :

Lorsque $FE = FE_{MID}$ : $k_{FE\_1} = 0$ et donc $Rp = Rp_{FEmid}$
Lorsque $FE = FE_{MIN}$ : $k_{FE\_1} = 1$ et donc $Rp = Rp_{FEmin}$

Si au contraire $FE_{MID} \leq FE \leq FE_{MAX}$, comme cela est représenté en pointillés sur la figure 3, alors on calcule $R_p$ par la formule:

$$Rp = Rp_{FEmax} + k_{FE\_2} \times (Rp_{FEmid} - Rp_{FEmax})$$

Avec :

$$k_{FE\_2} = \min\left(1 ; \max\left(0 ; \frac{FE_{MAX} - FE}{FE_{MAX} - FE_{MID}}\right)\right) , \quad k_{FE\_2} \in [0 ; 1]$$

ce qui implique notamment que :

Lorsque $FE = FE_{MAX}$ : $k_{FE\_2} = 0$ et donc $Rp = Rp_{FEmax}$
Lorsque $FE = FE_{MID}$ : $k_{FE\_2} = 1$ et donc $Rp = Rp_{FEmid}$

Les différentes valeurs $Rp_{FEmin}$, $Rp_{FEmid}$ et $Rp_{FEmax}$ sont une estimation du rapport de pression global pour des plages de points (FE, OA), où FE est respectivement fixé à $FE_{MIN}$, $FE_{MID}$, et $FE_{MAX}$ et OA varie entre $OA_{MIN}$ et $OA_{MAX}$ pour chacune des trois valeurs fixées de FE. $Rp_{FEmin}$, $Rp_{FEmid}$ et $Rp_{FEmax}$ sont données par interpolation linéaire après comparaison de OA aux positions prédéterminées des soupapes d'admission $OA_{MIN}$, $OA_{MID}$, et $OA_{MAX}$.

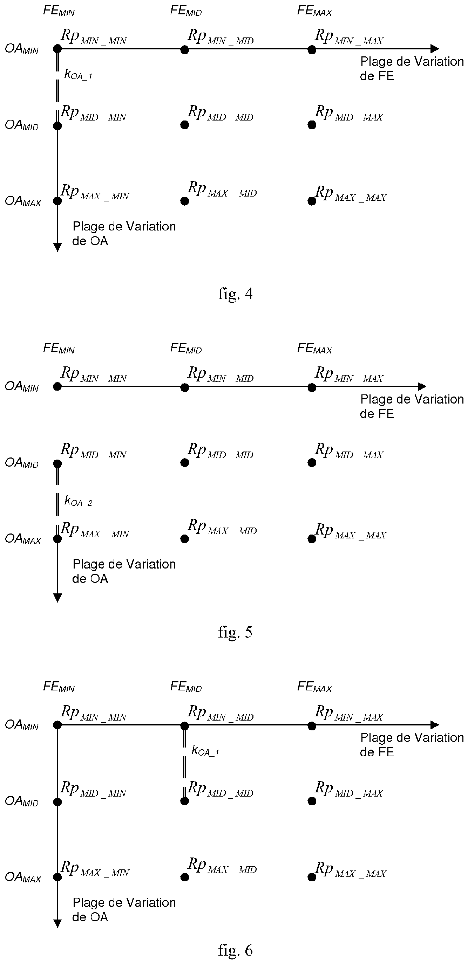

Ainsi, $Rp_{FEmin}$ est une estimation du rapport de pression global pour les plages en pointillés des figures 4 et 5 pour des positions d'arbre à cames échappement minimales.

Si $FE = FE_{MIN}$ et $OA_{MIN} \leq OA \leq OA_{MID}$ (en trait pointillé sur la figure 4), on calcule

$$Rp_{FEmin} = Rp_{MID\_MIN} + k_{OA\_1} \times (Rp_{MIN\_MIN} - Rp_{MID\_MIN})$$

Avec

$$k_{OA\_1} = \min\left(1\,;\max\left(0\,;\frac{OA_{MID} - OA}{OA_{MID} - OA_{MIN}}\right)\right)\,, \qquad k_{OA\_1} \in \left[0\,;1\right]$$

ce qui implique :

Lorsque $OA = OA_{MID}$ : $k_{OA\_1}$ - 0 et donc $Rp_{FEmin} = Rp_{MID\_MIN}$
Lorsque $OA = OA_{MIN}$ . $k_{OA\_1} = 1$ et donc $Rp_{FEmin}$ $RP_{MIN\_MIN}$

Au contraire, si $FE = FE_{MIN}$ et $OA_{MID} \le OA \le OA_{MAX}$ (en trait pointillé sur la figure 5), on calcule $Rp_{EEmin} = Rp_{MAX\_MIN} + k_{OA\_2} \times (Rp_{MID\_MIN} - Rp_{MAX\_MIN})$

Avec $k_{OA\_2} = \min\left(1\,;\max\left(0\,;\frac{OA_{MAX} - OA}{OA_{MAX} - OA_{MID}}\right)\right) k_{OA\_2} \in \left[0\,;1\right]$ ce qui implique :

Lorsque $OA = OA_{MAX}$ : $k_{OA\_2} = 0$ et donc $Rp_{FEmin} = Rp_{MAX\_MIN}$
Lorsque $OA = OA_{MID}$ : $k_{OA\_2} = 1$ et donc $Rp_{FEmin} = RP_{MID\_MIN}$

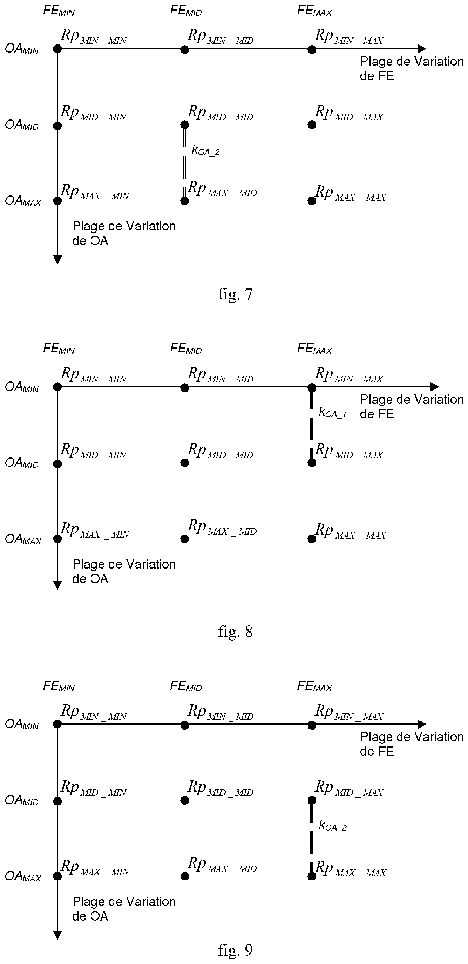

Rp $_{FEmid}$ est une estimation du rapport de pression global pour les plages en pointillés des figures 6 et 7, pour des positions d'arbre à cames échappement moyennes.
Dans ce cas, nous déterminons le rapport de pression « $Rp_{FEmid}$ » dans les deux cas possibles :

Si $FE = FE_{MID}$ et $OA_{MIN} \le OA \le OA_{MID}$ (en trait pointillé sur la figure 6), on calcule
$Rp_{FEmid} = Rp_{MID\_MID} + K_{OA\_1} \times (Rp_{MIN\_MID} - Rp_{MID\_MID})$ ce qui implique
Lorsque $OA = OA_{MID}$ : $k_{OA\_1} = 0$ et donc $Rp_{FEmid} = Rp_{MID\_MID}$
Lorsque $OA = OA_{MIN}$ : $k_{OA\_1} = 1$ et donc $Rp_{FEmid} = Rp_{MIN\_MID}$

Au contraire, si $FE = FE_{MID}$ et $OA_{MID} \le OA \le OA_{MAX}$ (en trait pointillé sur la figure 7), on calcule $Rp_{FEmid} = Rp_{MAX\_MID} + k_{OA\_2} \times (Rp_{MID\_MID} - Rp_{MAX\_MID})$
Ce qui implique

Lorsque $OA = OA_{MAX}$ : $k_{OA\_2} = 0$ et donc $Rp_{FEmid} = Rp_{MAX\_MID}$
Lorsque $OA = OA_{MID}$ : $k_{OA\_2} = 1$ et donc $Rp_{FEmid} = Rp_{MID\_MID}$.

Rp $_{FEmax}$ est une estimation du rapport de pression global pour les plages en pointillés des figures 8 et 9, pour des positions d'arbre à cames échappement maximales.
Dans ce cas, nous déterminons le rapport de pression « $R_{p\,FE\,max}$ » dans les deux cas possibles :

Si $FE = FE_{MAX}$ et $OA_{MIN} \le OA \le OA_{MID}$ (en trait pointillé sur la figure 8), on calcule :

$$Rp_{FEmax} = Rp_{MID\_MAX} + k_{OA\_1} \times (Rp_{MIN\_MAX} - Rp_{MID\_MAX})$$

Lorsque $OA = OA_{MID}$ : $k_{OA\_1} = 0$ et donc $Rp_{FEmax} = Rp_{MID\_MAX}$
Lorsque $OA = OA_{MIN}$ : $k_{OA\_1} 1 = 1$ et donc $Rp_{FEmax} = Rp_{MIN\_MAX}$

Au contraire, si $FE = FE_{MAX}$ et $OA_{MID} \le OA \le OA_{MAX}$ (en trait pointillé sur la figure 9) :

$$Rp_{FEmax} = Rp_{MAX\_MAX} + k_{OA\_2} \times (Rp_{MID\_MAX} - Rp_{MAX\_MAX})$$

ce qui implique

Lorsque $OA = GA_{MAX}$ : $k_{OA\_2} = 0$ et donc $Rp_{FEmax} = Rp_{MAX\_MAX}$
Lorsque $OA = OA_{MID}$ : $k_{OA\_2} = 1$ et donc $Rp_{FEmax} = Rp_{MID\_MAX}$

On peut mettre en oeuvre le procédé d'estimation décrit ci-dessus dans un procédé d'estimation de remplissage en air frais d'un moteur de véhicule en fonction de la pression d'échappement instantanée, la pression d'échappement instantanée étant estimée suivant le procédé. L'estimateur peut également être utilisé pour d'autres usages que le modèle d'estimation de remplissage en air frais en fonction de la manière dont il est calibré.

Une ligne d'échappement des gaz d'échappement d'un moteur peut comprendre une mémoire contenant les cartographies ayant pour entrées le régime moteur et le remplissage total, et un calculateur pour estimer la pression d'échappement instantanée selon le procédé décrit précédemment. Le calculateur peut comprendre un processeur en liaison avec un support comprenant des instructions pour la mise en oeuvre du procédé d'estimation décrit.

Une telle ligne peut être mise en oeuvre en sortie d'un moteur de véhicule, en particulier un moteur thermique essence, optionnellement muni d'un déphaseur d'arbre à cames. Un tel véhicule est particulièrement adapté pour la mise en oeuvre du croisement de soupapes.

La formule générale $P_{instantanee} = P_{reference} \times Rp$ proposée pour évaluer la pression d'échappement instantanée permet de dissocier l'influence de $P_{reference}$ d'un côté et du couple (régime moteur, remplissage total) de l'autre. Les cartographies sont ainsi moins longues à établir et prennent en outre moins d'espace mémoire.

## Revendications

1. Procédé d'estimation de la pression d'échappement instantanée d'un moteur de véhicule, le moteur étant relié à un collecteur d'échappement, le véhicule comprenant au moins un arbre à cames commandant des soupapes d'admission et d'échappement, **caractérisé en ce que** le procédé comprend les étapes de :

   - détermination d'un régime du moteur et d'un remplissage total de gaz à l'échappement ;
   - calcul de rapports de pression intermédiaires à partir de cartographies ayant pour entrées le régime moteur et le remplissage total, les rapports de pression intermédiaires établis en sortie des cartographies étant les rapports de pression pour des positions prédéterminées des soupapes d'admission ou d'échappement ;
   - calcul d'un rapport de pression global par interpolation des rapports de pression intermédiaires ; et
   - multiplication du rapport de pression global par une pression d'échappement de référence, le produit de la multiplication déterminant la pression d'échappement instantanée,

   le remplissage total $D$ étant donné par la formule :

   $$D = k_1 \times \frac{debit}{\rho_0 \times V_0 \times N \times Nbr\_cyl} \times \sqrt{\frac{T_0}{T_{ech}}} \times \frac{P_0}{P_{atmo}}$$

   avec: $debit = debit_{ech}$ pour un moteur atmosphérique ou susceptible d'être suralimenté, ou $debit = debit_{turbine} = debit_{ech} - debit_{wastegate}$, le moteur étant suralimenté ;
   et avec :

   $debit_{ech}$ : débit échappement total en [kg/s] :

   $$debit_{ech} = debit_{air\_frais} + debit_{air\_balayé} + debit_{essence} - debit_{EGR} + debit_{IAE}$$

   $debit_{air\_frais}$ : débit d'air frais issu du remplissage en air frais en [kg/s],
   $debit_{air\_balayé}$ : débit d'air frais balayé de l'admission vers l'échappement en [kg/s],
   $debit_{essence}$ : débit d'essence injecté en [kg/s],
   $debit_{EGR}$ : débit d'EGR en [kg/s],
   $debit_{IAE}$ : débit d'IAE en [kg/s],
   $debit_{turbine}$ : débit total passant par la turbine en [kg/s]
   $debit_{wastegate}$ : débit d'air passant par la wastegate en [kg/s],
   $Nbr\_cyl$ : nombre de cylindre du moteur thermique,
   $\rho_0$ : masse volumique de normalisation en [kg/m3],
   $V_0$ : volume de normalisation : cylindrée unitaire du moteur en [m3],
   $T_{ech}$ : température échappement dans le collecteur en [K],
   $T_0$ : température de normalisation en [K],

$P_0$: pression de normalisation en [Pa],

$P_{atmo}$ : pression atmosphérique en [Pa],

$N$ : régime moteur en [tr/min],

$k_1$ : coefficient de conversion d'unité.

**2.** Le procédé selon la revendication 1, **caractérisé en ce que** les positions prédéterminées des soupapes sont une position minimale, une position moyenne, et une position maximale d'ouverture des soupapes d'admission, et une position minimale, une position moyenne, et une position maximale de fermeture des soupapes d'échappement.

**3.** Le procédé selon la revendication 1 ou 2, **caractérisé en ce que** l'interpolation est fonction d'une valeur cible d'ouverture de soupape d'admission prédéterminée et d'une valeur cible de fermeture de soupape d'échappement prédéterminée.

**4.** Le procédé selon la revendication 3, **caractérisé en ce que** l'interpolation est précédée des étapes de : détermination des deux positions prédéterminées des soupapes d'échappement voisines de la valeur cible de fermeture; détermination des deux positions prédéterminées des soupapes d'admission voisines de la valeur cible d'ouverture ; et, interpolation linéaire entre les rapports de pression intermédiaires des deux positions prédéterminées des soupapes d'échappement voisines de la valeur cible de fermeture et des deux positions prédéterminées des soupapes d'admission voisines de la valeur cible d'ouverture.

**5.** Procédé selon l'une des revendications 1 à 4, **caractérisé en ce que** la pression d'échappement de référence ($P_{reference}$) est égale à la pression d'échappement moyenne évaluée sur un cycle du moteur dans le collecteur, ou après une turbine, le moteur étant suralimenté.

**6.** Ligne d'échappement des gaz d'échappement d'un moteur, **caractérisée en ce que** la ligne comprenant une mémoire contenant les cartographies ayant pour entrées le régime et le remplissage, un calculateur pour estimer la pression d'échappement instantanée suivant le procédé selon l'une des revendications 1 à 5.

**7.** Véhicule **caractérisé en ce qu'**il comprend un moteur et, en sortie du moteur, une ligne d'échappement selon la revendication 6.

**Patentansprüche**

**1.** Verfahren zur Schätzung des momentanen Abgasdrucks eines Fahrzeugmotors, wobei der Motor mit einem Abgaskrümmer verbunden ist, das Fahrzeug mindestens eine Nockenwelle zur Steuerung der Einlass- oder Auslassventile umfasst, **dadurch gekennzeichnet, dass** das Verfahren folgende Schritte umfasst:

- Bestimmung einer Motordrehzahl und einer Gesamtabgasfüllung;
- Berechnung von Zwischendruckverhältnissen anhand von Kartographien, welche die Motordrehzahl und die Gesamtfüllung als Eingaben haben, wobei die durch die Ausgabe der Kartographien ermittelten Zwischendruckverhältnisse Druckverhältnisse für vorbestimmte Positionen der Einlass- und Auslassventile sind;
- Berechnung eines Gesamtdruckverhältnisses durch Interpolation von Zwischendruckverhältnissen; und
- Übersetzung des Gesamtdruckverhältnisses durch einen Referenzabgasdruck, wobei das Produkt der Übersetzung den momentanen Abgasdruck bestimmt,

wobei die Gesamtfüllung D sich aus der Formel ergibt:

$$D = k_1 \times \frac{debit}{\rho_0 \times V_0 \times N \times Nbr\_cyl} \times \sqrt{\frac{T_0}{T_{ech}}} \times \frac{P_0}{P_{atmo}}$$

mit: *debit* (*Durchfluss*) = $Durchfluss_{ges}$ für einen Saugmotor oder in der Lage, aufgeladen zu werden, oder debit (*Durchfluss*) = $Durchfluss_{Turbine}$ = $Durchfluss_{ges}$ - $Durchfluss_{wastegate}$, wobei der Motor aufgeladen ist; und mit:

$Durchfluss_{ges}$: Gesamtauslassdurchfluss in [kg/s]:

$$Durchfluss_{ges} = Durchfluss_{Frischluft} + Durchfluss_{durch\_Luft} + Durchfluss_{Kraftstoff} - Durchfluss_{AGR} +$$

$$Durchfluss_{IAE}$$

$Durchfluss_{Frischluft}$: aus der Füllung mit Frischluft stammender Frischluftdurchfluss in [kg/s],
$Durchfluss_{durch\_Luft}$: vom Einlass zum Auslass durchströmter Frischluftdurchfluss in [kg/s],
$Durchfluss_{Kraftstoff}$: Durchfluss des eingespritzten Kraftstoffs in [kg/s],
$Durchfluss_{AGR}$: Durchfluss der AGR in [kg/s],
$Durchfluss_{IAE}$: Durchfluss des Einspritzens von Luft in den Auspuff [kg/s],
$Durchfluss_{Turbine}$: Gesamtdurchfluss durch die Turbine in [kg/s]
$Durchfluss_{wastegate}$: Luftdurchfluss durch Wastegate in [kg/s],
$Nbr\_cyl$: Zylinderzahl des Verbrennungsmotors,
$\rho_0$: Normalisierungsdichte in [kg/m$^3$],
$V_0$: Normalisierungsvolumen: Einzelhubraum des Motors in [m3],
$T_{ech}$: Auslasstemperatur im Abgaskrümmer in [K],
$T_0$: Normalisierungstemperatur in [K],
$P_0$: Normalisierungsdruck in [Pa],
$P_{atmo}$: Atmosphärendruck in [Pa],
$N$: Motordrehzahl in [U/min],
$k_1$: Einheitsumwandlungskoeffizient.

2. Verfahren nach Anspruch 1, **dadurch gekennzeichnet, dass** die vorbestimmten Positionen der Ventile eine Minimalposition, eine Mittelposition und eine Maximalposition der Öffnung der Einlassventile und eine Minimalposition, eine Mittelposition und eine Maximalposition der Schließung der Auslassventile sind.

3. Verfahren nach Anspruch 1 oder 2, **dadurch gekennzeichnet, dass** die Interpolation von einem Sollwert der Öffnung des vorbestimmten Einlassventils und einem Sollwert der Schließung des vorbestimmten Auslassventils abhängig ist.

4. Verfahren nach Anspruch 3, **dadurch gekennzeichnet, dass** der Interpolation folgende Schritte vorangehen: Bestimmung der zwei vorbestimmten Positionen der Auslassventile in der Nähe des Sollwerts der Schließung; Bestimmung der zwei vorbestimmten Positionen der Einlassventile in der Nähe des Sollwerts der Öffnung; *und,* lineare Interpolation zwischen den Zwischendruckverhältnissen der zwei vorbestimmten Positionen der Auslassventile in der Nähe des Sollwerts der Schließung und der zwei vorbestimmten Positionen der Einlassventile in der Nähe des Sollwerts der Öffnung.

5. Verfahren nach einem der Ansprüche 1 bis 4, **dadurch gekennzeichnet, dass** der Referenzauslassdruck ($P_{referenz}$) dem auf einem Motorzyklus im Abgaskrümmer oder abwärts einer Turbine bewerteten durchschnittlichen Auslassdruck gleich ist, wobei der Motor aufgeladen ist.

6. Abgasleitung der Abgase eines Motors, **dadurch gekennzeichnet, dass** die Leitung einen Speicher umfasst, der Kartographien enthält, die als Eingaben die Drehzahl und die Füllung haben, einen Rechner zur Schätzung des momentanen Abgasdrucks gemäß dem Verfahren nach einem der Ansprüche 1 bis 5.

7. Fahrzeug, **dadurch gekennzeichnet, dass** es einen Motor und am Auslass des Motors eine Abgasleitung nach Anspruch 6 umfasst.

**Claims**

1. Method for estimating the instantaneous exhaust pressure of a vehicle engine, the engine being connected to an exhaust manifold, the vehicle comprising at least one camshaft controlling inlet and exhaust valves, **characterised in that** the method comprises the steps of:

   - determining an engine speed and a total gas filling at the exhaust;
   - calculation of intermediate pressure ratios from mappings with as their input the engine speed and the total filling, the intermediate pressure ratios established at the output of the mappings being the pressure ratios for predetermined positions of the inlet or exhaust valves;

- calculation of a global pressure ratio by interpolation of the intermediate pressure ratios; and
- multiplication of the global pressure ratio by a reference exhaust pressure, the product of the multiplication determining the instantaneous exhaust pressure,

the total filling $D$ being given by the formula:

$$D = k_1 \times \frac{debit}{\rho_0 \times V_0 \times N \times Nbr\_cyl} \times \sqrt{\frac{T_0}{T_{ech}}} \times \frac{P_0}{P_{atmo}}$$

with: debit *(flowrate)* = *flowrate$_{ex}$* for a naturally aspirated engine or one capable of being supercharged, or debit *(flowrate)* = *flowrate$_{turbine}$* = *flowrate$_{ex}$* - *flowrate$_{wastegate}$*, the engine being supercharged;
and with:

*flowrate$_{ex}$*: total exhaust flowrate in [kg/s]:

$$flowrate_{ex} = flowrate_{fresh\_air} + flowrate_{swept\_air} + flowrate_{petrol} - flowrate_{EGR} + flowrate_{IAE}$$

*flowrate$_{fresh\_air}$*: flowrate of fresh air issuing from the filling with fresh air in [kg/s],
*flowrate$_{swept\_air}$*: flowrate of fresh air swept from the inlet to the exhaust in [kg/s],
*flowrate$_{petrol}$*: flowrate of petrol injected in [kg/s],
*flowrate$_{EGR}$*: EGR flowrate in [kg/s],
*flowrate$_{IAE}$*: IAE flowrate in [kg/s]
*flowrate$_{turbine}$*: total flowrate passing through the turbine in [kg/s],
*flowrate$_{wastegate}$*: flowrate of air passing through the wastegate in [kg/s],
*Nbr_cyl*: number of cylinders of combustion engine,
$\rho_0$: standardisation density in [kg/m$^3$],
$V_0$: standardisation volume: unit cubic capacity of the engine in [m3],
$T_{ex}$: exhaust temperature in the manifold in [K],
$T_0$: standardisation temperature in [K],
$P_0$: standardisation pressure in [Pa],
$P_{atmo}$: atmospheric pressure in [Pa],
N: engine speed in [rev/min],
$k_1$: unit conversion coefficient.

**2.** Method according to claim 1, **characterised in that** the predetermined positions of the valves are a minimum position, a mean position and a maximum position of opening of the inlet valves, and a minimum position, a mean position and a maximum position of closure of the exhaust valves.

**3.** Method according to claim 1 or 2, **characterised in that** the interpolation is a function of a predetermined inlet valve opening target value and of a predetermined exhaust valve closure target value.

**4.** Method according to claim 3, **characterised in that** the interpolation is preceded by steps of: determination of the two predetermined positions of the exhaust valves adjacent to the closure target value; determination of the two predetermined positions of the exhaust valves adjacent to the opening target value; *and* linear interpolation between the intermediate pressure ratios of the two predetermined positions of the exhaust valves adjacent to the closure target value and the two predetermined positions of the inlet valves adjacent to the opening target value.

**5.** Method according to any of claims 1 to 4, **characterised in that** the reference exhaust pressure (P$_{reference}$) is equal to the mean exhaust pressure evaluated over one cycle of the engine in the manifold, or after a turbine, the engine being supercharged.

**6.** Exhaust line for the exhaust gases of an engine, **characterised in that**, the line comprising a memory containing mappings with the speed and filling as its inputs, a computer for estimating the instantaneous exhaust pressure according to the method according to any of claims 1 to 5.

7. Vehicle **characterised in that** it comprises an engine and, at the discharge from the engine, an exhaust line according to claim 6.

$FE_{MIN}$  $FE_{MID}$  $FE_{MAX}$

$Rp_{MIN\_MIN}$  $Rp_{MIN\_MAX}$

$OA_{MIN}$

Plage de variation
de FE

$Rp_{MID\_MIN}$  $Rp_{MID\_MID}$  $Rp_{MID\_MAX}$

$OA_{MID}$

$Rp_{MAX\_MIN}$  $Rp_{MAX\_MID}$  $Rp_{MAX\_MAX}$

$OA_{MAX}$

Plage de variation
de OA

Fig. 1

$FE_{MIN}$  $FE_{MID}$  $FE_{MAX}$

$Rp_{MIN\_MIN}$  $Rp_{MIN\_MID}$  $Rp_{MIN\_MAX}$

$OA_{MIN}$

$k_{FE\_1}$  Plage de Variation
de FE

$Rp_{MID\_MIN}$  $Rp_{MID\_MID}$  $Rp_{MID\_MAX}$

$OA_{MID}$

$Rp_{MAX\_MIN}$  $Rp_{MAX\_MID}$  $Rp_{MAX\_MAX}$

$OA_{MAX}$

Plage de Variation
de OA

fig. 2

$FE_{MIN}$  $FE_{MID}$  $FE_{MAX}$

$Rp_{MIN\_MIN}$  $Rp_{MIN\_MID}$  $Rp_{MIN\_MAX}$

$OA_{MIN}$

$k_{FE\_2}$  Plage de Variation
de FE

$Rp_{MID\_MIN}$  $Rp_{MID\_MID}$  $Rp_{MID\_MAX}$

$OA_{MID}$

$Rp_{MAX\_MIN}$  $Rp_{MAX\_MID}$  $Rp_{MAX\_MAX}$

$OA_{MAX}$

Plage de Variation
de OA

Fig. 3

$FE_{MIN}$      $FE_{MID}$      $FE_{MAX}$

$OA_{MIN}$  $Rp_{MIN\_MIN}$      $Rp_{MIN\_MID}$      $Rp_{MIN\_MAX}$

Plage de Variation
de FE

$k_{OA\_1}$

$OA_{MID}$  $Rp_{MID\_MIN}$      $Rp_{MID\_MID}$      $Rp_{MID\_MAX}$

$OA_{MAX}$  $Rp_{MAX\_MIN}$      $Rp_{MAX\_MID}$      $Rp_{MAX\_MAX}$

Plage de Variation
de OA

fig. 4

$FE_{MIN}$      $FE_{MID}$      $FE_{MAX}$

$OA_{MIN}$  $Rp_{MIN\_MIN}$      $Rp_{MIN\_MID}$      $Rp_{MIN\_MAX}$

Plage de Variation
de FE

$OA_{MID}$  $Rp_{MID\_MIN}$      $Rp_{MID\_MID}$      $Rp_{MID\_MAX}$

$k_{OA\_2}$

$OA_{MAX}$  $Rp_{MAX\_MIN}$      $Rp_{MAX\_MID}$      $Rp_{MAX\_MAX}$

Plage de Variation
de OA

fig. 5

$FE_{MIN}$      $FE_{MID}$      $FE_{MAX}$

$OA_{MIN}$  $Rp_{MIN\_MIN}$      $Rp_{MIN\_MID}$      $Rp_{MIN\_MAX}$

Plage de Variation
de FE

$k_{OA\_1}$

$OA_{MID}$  $Rp_{MID\_MIN}$      $Rp_{MID\_MID}$      $Rp_{MID\_MAX}$

$OA_{MAX}$  $Rp_{MAX\_MIN}$      $Rp_{MAX\_MID}$      $Rp_{MAX\_MAX}$

Plage de Variation
de OA

fig. 6

$FE_{MIN}$        $FE_{MID}$        $FE_{MAX}$

$OA_{MIN}$   $Rp_{MIN\_MIN}$     $Rp_{MIN\_MID}$     $Rp_{MIN\_MAX}$

Plage de Variation
de FE

$OA_{MID}$   $Rp_{MID\_MIN}$     $Rp_{MID\_MID}$     $Rp_{MID\_MAX}$

$k_{OA\_2}$

$OA_{MAX}$   $Rp_{MAX\_MIN}$     $Rp_{MAX\_MID}$     $Rp_{MAX\_MAX}$

Plage de Variation
de OA

fig. 7

$FE_{MIN}$        $FE_{MID}$        $FE_{MAX}$

$OA_{MIN}$   $Rp_{MIN\_MIN}$     $Rp_{MIN\_MID}$     $Rp_{MIN\_MAX}$

$k_{OA\_1}$   Plage de Variation
de FE

$OA_{MID}$   $Rp_{MID\_MIN}$     $Rp_{MID\_MID}$     $Rp_{MID\_MAX}$

$OA_{MAX}$   $Rp_{MAX\_MIN}$     $Rp_{MAX\_MID}$     $Rp_{MAX\_MAX}$

Plage de Variation
de OA

fig. 8

$FE_{MIN}$        $FE_{MID}$        $FE_{MAX}$

$OA_{MIN}$   $Rp_{MIN\_MIN}$     $Rp_{MIN\_MID}$     $Rp_{MIN\_MAX}$

Plage de Variation
de FE

$OA_{MID}$   $Rp_{MID\_MIN}$     $Rp_{MID\_MID}$     $Rp_{MID\_MAX}$

$k_{OA\_2}$

$OA_{MAX}$   $Rp_{MAX\_MIN}$     $Rp_{MAX\_MID}$     $Rp_{MAX\_MAX}$

Plage de Variation
de OA

fig. 9

**RÉFÉRENCES CITÉES DANS LA DESCRIPTION**

**Documents brevets cités dans la description**

- FR 2919388 A

- WO 2008024590 A